(19) Europäisches Patentamt
European Patent Office
Office européen des brevets

(11) **EP 3 923 185 A2**

(12) **EUROPEAN PATENT APPLICATION**

(43) Date of publication:
**15.12.2021 Bulletin 2021/50**

(51) Int Cl.:
***G06K 9/00*** *(2006.01)*     ***G06K 9/62*** *(2006.01)*

(21) Application number: **21202754.4**

(22) Date of filing: **14.10.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.03.2021 CN 202110235776**

(71) Applicant: **Beijing Baidu Netcom Science and Technology Co., Ltd. Beijing 100085 (CN)**

(72) Inventors:
• **YU, Yuechen**
  **BEIJING, 100085 (CN)**
• **ZHANG, Chengquan**
  **BEIJING, 100085 (CN)**

• **LI, Yulin**
  **BEIJING, 100085 (CN)**
• **ZHANG, Xiaoqiang**
  **BEIJING, 100085 (CN)**
• **HUANG,, Ju**
  **BEIJING, 100085 (CN)**
• **QIN, Xiameng**
  **BEIJING, 100085 (CN)**
• **YAO, Kun**
  **BEIJING, 100085 (CN)**
• **LIU, Jingtuo**
  **BEIJING, 100085 (CN)**
• **HAN, Junyu**
  **BEIJING, 100085 (CN)**
• **DING, Errui**
  **BEIJING, 100085 (CN)**

(74) Representative: **Regimbeau**
**20, rue de Chazelles**
**75847 Paris Cedex 17 (FR)**

(54) **IMAGE CLASSIFICATION METHOD AND APPARATUS, ELECTRONIC DEVICE AND STORAGE MEDIUM**

(57) Provided are an image classification method and apparatus, an electronic device and a storage medium, relating to the field of artificial intelligence and, in particular, to computer vision and deep learning. The method includes inputting (S101, S201, S301) a to-be-classified document image into a pretrained neural network and obtaining a feature submap of each text box of the to-be-classified document image by use of the neural network; inputting (S102, S202, S302) the feature submap of each text box, a semantic feature corresponding to preobtained text information of each text box and a position feature corresponding to preobtained position information of each text box into a pretrained multimodal feature fusion model and fusing, by use of the multimodal feature fusion model, the three into a multimodal feature corresponding to each text box; and classifying (S103) the to-be-classified document image based on the multimodal feature corresponding to each text box. The semantic feature and position feature in the document image are well used so that the object of improving the classification accuracy of the document image is achieved.

EP 3 923 185 A2

**(Cont. next page)**

S101

Input a to-be-classified document image into a pretrained neural network and obtain a feature submap of each text box of the to-be-classified document image by use of the neural network

S102

Input the feature submap of each text box, a semantic feature corresponding to preobtained text information of each text box and a position feature corresponding to preobtained position information of each text box into a pretrained multimodal feature fusion model and fuse, by use of the multimodal feature fusion model, the feature submap of each text box, the semantic feature corresponding to the preobtained text information of each text box and the position feature corresponding to the preobtained position information of each text box into a multimodal feature corresponding to each text box

S103

Classify the to-be-classified document image based on the multimodal feature corresponding to each text box

**FIG. 1**

## Description

TECHNICAL FIELD

The present disclosure relates to the technical field of artificial intelligence and, in particular, to computer vision and deep learning, especially an image classification method and apparatus, an electronic device and a storage medium.

BACKGROUND

Optical character recognition has received extensive attention and been widely used in various fields such as education, finance, health care, transportation and insurance. With the development of electronic office work, documents originally stored as paper gradually start to be stored as images by use of an electronic device such as a scanner. To query or view a specified recorded image, it is needed to index the image to the content data of the image. To create an index, it is usual practice to use OCR to classify scanned images and then recognize the images to obtain the content of the images.

In a mainstream classification method based on a convolutional neural network in the industry, only an image feature of document images can be extracted for classification of the document images. This method, however, ignores a semantic feature and a position feature of the text in the document image. As a result, the information which includes the semantic feature and the position feature and is very important for classification of the document images cannot be well used. In this method, although the semantic feature and the position feature in the document images can be used, complex postprocessing is often required to improve the classification accuracy.

SUMMARY

The present application provides an image classification method and apparatus, an electronic device and a storage medium.

In a first aspect, the present application provides an image classification method. The method includes inputting a to-be-classified document image into a pretrained neural network model and obtaining a feature submap of each text box of the to-be-classified document image by use of the neural network model; inputting the feature submap of each text box, a semantic feature corresponding to preobtained text information of each text box and a position feature corresponding to preobtained position information of each text box into a pretrained multimodal feature fusion model and fusing, by use of the multimodal feature fusion model, the feature submap of each text box, the semantic feature corresponding to the preobtained text information of each text box and the position feature corresponding to the preobtained position information of each text box into a multimodal feature corresponding to each text box; and classifying the to-be-classified document image based on the multimodal feature corresponding to each text box.

In a second aspect, the present application provides an image classification apparatus. The apparatus includes a feature map obtaining module, a feature fusion module and an image classification module.

The feature map obtaining module is configured to input a to-be-classified document image into a pretrained neural network model and obtain a feature submap of each text box of the to-be-classified document image by use of the neural network model.

The feature fusion module is configured to input the feature submap of each text box and a semantic feature corresponding to preobtained text information of each text box and a position feature corresponding to preobtained position information of each text box into a pretrained multimodal feature fusion model and fuse, by use of the multimodal feature fusion model, the feature submap of each text box, the semantic feature corresponding to the preobtained text information of each text box and the position feature corresponding to the preobtained position information of each text box into a multimodal feature corresponding to each text box.

The image classification module is configured to classify the to-be-classified document image based on the multimodal feature corresponding to each text box.

In a third aspect, the present application provides an electronic device. The electronic device includes one or more processors; and a memory configured to store one or more programs.

When executed by the one or more processors, the one or more programs cause the one or more processors to perform the image classification method according to any embodiment of the present application.

In a fourth aspect, the present application provides a storage medium. The storage medium stores one or more computer programs. When executed by one or more processors, the one or more programs cause the one or more processors to perform the image classification method according to any embodiment of the present application.

In a fifth aspect, the present application provides a computer program product. When executed by a computer device, the computer program product causes the computer device to perform the image classification method according to any embodiment of the present application.

The technique according to the present application solves the problem in which a classification method based on a convolutional neural network in the related art can be used to extract only an image feature of a document image to classify the document image, ignores a semantic feature and a position feature in the document image and thus cannot well use the semantic and position feature information in the document image and solves the problem in which the classification method based on a convolutional neural network in the related art requires complex post-processing to improve the classification accuracy. The technique according to the present application can well use semantic and position features in a document image and effectively fuse and align image information, semantic information and position information of the document image to achieve the object of improving the classification accuracy of the document image.

It is to be understood that the content described in this part is neither intended to identify key or important features of embodiments of the present disclosure nor intended to limit the scope of the present disclosure. Other features of the present disclosure are apparent from the description provided hereinafter.

BRIEF DESCRIPTION OF DRAWINGS

The drawings are intended to provide a better understanding of the present solution and not to limit the present disclosure.

FIG. 1 is a first flowchart of an image classification method according to an embodiment of the present application.

FIG. 2 is a second flowchart of an image classification method according to an embodiment of the present application.

FIG. 3 is a third flowchart of an image classification method according to an embodiment of the present application.

FIG. 4 is a diagram illustrating the structure of an image classification apparatus according to an embodiment of the present application.

FIG. 5 is a block diagram of an electronic device for performing an image classification method according to an embodiment of the present application.

DETAILED DESCRIPTION

Example embodiments of the present disclosure, including details of embodiments of the present disclosure, are described hereinafter in conjunction with the drawings to facilitate understanding. The example embodiments are illustrative only.

Embodiment one

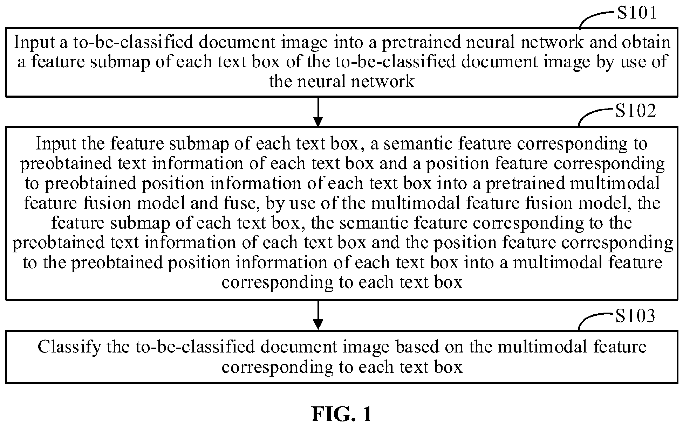

FIG. 1 is a first flowchart of an image classification method according to an embodiment of the present application. The method may be performed by an image classification apparatus or by an electronic device. The apparatus or the electronic device may be implemented as software and/or hardware. The apparatus or the electronic device may be integrated in any intelligent device having the network communication function. As shown in FIG. 1, the image classification method may include the steps below.

In S101, a to-be-classified document image is input into a pretrained neural network, and a feature submap of each text box of the to-be-classified document image is obtained by use of the neural network.

In this step, the electronic device may input a to-be-classified document image into a pretrained neural network and obtain a feature submap of each text box of the to-be-classified document image by use of the neural network. For example, the electronic device may input the entire document image into a typical convolutional neural network structure to obtain a feature map of the entire document image and then input the feature map of the entire document image to an object detection special layer (ROIAlign layer) to obtain a same-sized feature submap of each text box. The typical convolutional neural network structure may be a typical convolutional neural network, for example, ResNet, Visual Graphics Generator (VGG) or MobileNet.

In S102, the feature submap of each text box, a semantic feature corresponding to preobtained text information of each text box and a position feature corresponding to preobtained position information of each text box are input into a pretrained multimodal feature fusion model, and the feature submap of each text box, the semantic feature corresponding to the preobtained text information of each text box and the position feature corresponding to the preobtained position information of each text box are fused, by use of the multimodal feature fusion model, into a multimodal feature corresponding to each text box.

In this step, the electronic device may input the feature submap of each text box, a semantic feature corresponding to preobtained text information of each text box and a position feature corresponding to preobtained position information of each text box into a pretrained multimodal feature fusion model and fuse, by use of the multimodal feature fusion model, the feature submap of each text box, the semantic feature corresponding to the preobtained text information of each text box and the position feature corresponding to the preobtained position information of each text box into a multimodal feature corresponding to each text box. For example, the electronic device may preobtain text information of each text box and position information of each text box through OCR. The text information may be represented by Chinese or English. The position information is a quadruple [x1, y1, x2, y2]. x1 denotes the x-coordinate of the vertex in the upper left corner of each text box. y1 denotes the y-coordinate of the vertex in the upper left corner of each text box. x2 denotes the x-coordinate of the vertex in the lower right corner of each text box. y2 denotes the y-coordinate of the vertex in the lower right corner of each text box. Then for the text information of each text box, the electronic device may convert, by use of a word vector generation structure (Word2Vec layer), text information represented in natural language to a vector of the same length to facilitate subsequent batch processing. Finally, the electronic device may input the position information of each text box to the Word2Vec layer and convert the position information to a vector of a fixed length. After the three input vectors (the feature submap of each text box, the semantic feature corresponding to the preobtained text information of each text box and the position feature corresponding to the preobtained position information of each text box) are determined and obtained, the three input vectors are simultaneously input into a pretrained multimodal feature fusion model (multilayer transformer encoder). The functions of the model are to transfer features of different modes to a same feature space, fuse these features into a feature having multimodal information at the same time and then pool this feature to obtain a token-level feature.

In S103, the to-be-classified document image is classified based on the multimodal feature corresponding to each text box.

In this step, the electronic device may classify the to-be-classified document image based on the multimodal feature corresponding to each text box. For example, the electronic device may pool the multimodal feature corresponding to each text box to obtain a multimodal feature corresponding to the to-be-classified document image; and then classify the to-be-classified document image based on the multimodal feature corresponding to the to-be-classified document image. For example, the electronic device may input the multimodal feature corresponding to the entire document image into a logistic regression model (softmax layer) to obtain the prediction confidence of each type of document, where the prediction confidence is predicted by the model.

In the image classification method according to this embodiment of the present application, a to-be-classified document image is input into a pretrained neural network, and a feature submap of each text box of the to-be-classified document image is obtained by use of the neural network; the feature submap of each text box, a semantic feature corresponding to preobtained text information of each text box and a position feature corresponding to preobtained position information of each text box are input into a pretrained multimodal feature fusion model, and the feature submap of each text box, the semantic feature corresponding to the preobtained text information of each text box and the position feature corresponding to the preobtained position information of each text box are fused, by use of the multimodal feature fusion model, into a multimodal feature corresponding to each text box; and then the to-be-classified document image is classified based on the multimodal feature corresponding to each text box. That is, in the present application, the feature submap of each text box, the semantic feature corresponding to the preobtained text information of each text box and the position feature corresponding to the preobtained position information of each text box are fused into a multimodal feature, and then the to-be-classified document image is classified based on the multimodal feature corresponding to each text box. In an existing image classification method, only an image feature of a document image can be extracted for classification of the document image. This method ignores a semantic feature and a position feature in the document image. As a result, the semantic and position features in the document image cannot be well used. Moreover, complex post-processing is required in the classification method based on a convolutional neural network to improve the classification accuracy. Since the present application uses the technique of fusing the feature submap of each text box, the semantic feature corresponding to the preobtained text information of each text box and the position feature corresponding to the preobtained position information of each text box into a multimodal feature, the problems in a classification method based on a convolutional neural network in the related art are overcome, where the problems includes that the classification method based on a convolutional neural network in the related art can be used to extract only an image feature of a document image to classify the document image, ignores a semantic feature and a position feature in the document image and thus cannot well use the semantic and position feature information in the document image, and requires complex post-processing to improve the classification accuracy. Therefore, the technique according to the present application can well use semantic and position features in a document image and effectively fuse and align image information, semantic information and position information of the document image to achieve the object of improving the classification accuracy of the document image. Moreover, the technique according to the present application can be implemented and popularized easily and thus can be used more widely.

Embodiment two

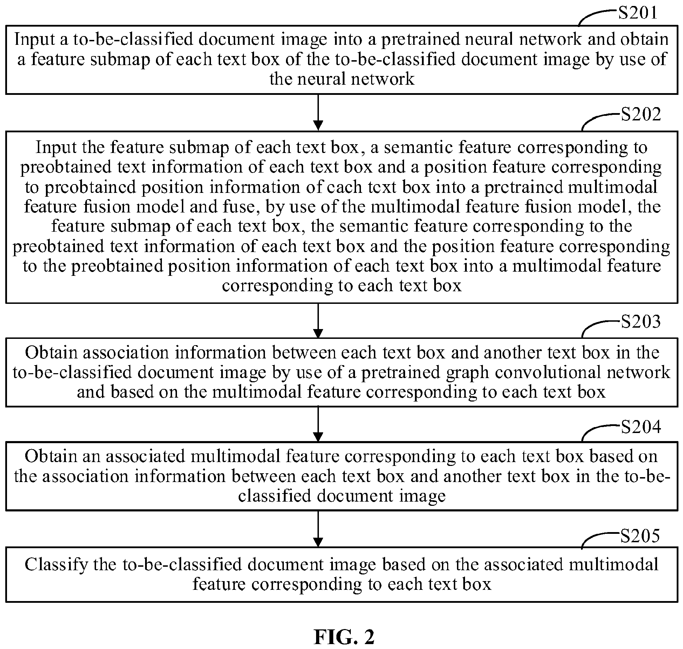

FIG. 2 is a second flowchart of an image classification method according to an embodiment of the present application. This embodiment is optimized and expanded based on the preceding solution and can be combined with each preceding optional implementation. As shown in FIG. 2, the image classification method may include the steps below.

In S201, a to-be-classified document image is input into a pretrained neural network, and a feature submap of each text box of the to-be-classified document image is obtained by use of the neural network.

In S202, the feature submap of each text box, a semantic feature corresponding to preobtained text information of each text box and a position feature corresponding to preobtained position information of each text box are input into a pretrained multimodal feature fusion model, and the feature submap of each text box, the semantic feature corresponding to the preobtained text information of each text box and the position feature corresponding to the preobtained position information of each text box are fused, by use of the multimodal feature fusion model, into a multimodal feature corresponding to each text box.

In this embodiment of the present application, the multimodal feature fusion model includes six layers. Each layer includes two sublayers: a first sublayer and a second sublayer. The first sublayer is a multihead self-attention layer. The second sublayer is a fully connected feedforward network. The dimension of an output vector of the first sublayer and the dimension of an output vector of the second sublayer are each 512. For example, the multimodal feature fusion model is the key to the fusion of features of different modes. The multimodal feature fusion model is composed of six layers. Each layer includes two sublayers. The first sublayer is a multihead self-attention layer. The second sublayer is a simple fully-connected feedforward network. Residual connection and normalization follow each sublayer. To facilitate residual connection, the dimension of an output vector of each sublayer, including an initial word embedding layer, of the model is 512.

In S203, association information between each text box and another text box in the to-be-classified document image is obtained by use of a pretrained graph convolutional network (GCN) and based on the multimodal feature corresponding to each text box.

In this step, the electronic device may obtain association information between each text box and another text box in the to-be-classified document image by use of a pretrained graph convolutional network and based on the multimodal feature corresponding to each text box. For example, the electronic device may pool the multimodal feature corresponding to each text box to obtain a token-level feature corresponding to each text box; and then input the token-level feature corresponding to each text box into the pretrained graph convolutional network and obtain the association information between each text box and another text box in the to-be-classified document image by use of the graph convolutional network. The feature of each text box is obtained independently. For this reason, to enable transmission and communication between different token-level features, it is feasible to input these features into a graph convolutional network to enable each token-level feature to acquire information related to the each token-level feature.

In S204, an associated multimodal feature corresponding to each text box is obtained based on the association information between each text box and another text box in the to-be-classified document image.

In this step, the electronic device may obtain an associated multimodal feature corresponding to each text box based on the association information between each text box and another text box in the to-be-classified document image. The convolution kernel of a commonly used convolutional neural network is of a fixed size and is generally oriented towards a regular data structure such as a sequence or an image. However, not all real data is presented in a two-dimensional or three-dimensional manner. The graph convolutional network can solve the extraction problem of irregular data. The core formula of the graph convolutional network is

$$X_{n+1} = \sigma(\sum_{i}^{k} L^k X_n W)$$

. In the formula, $X_n$ denotes the input data (each token-level feature) of the model, $X_{n+1}$ denotes the output data of the model, $L^k$ denotes the Laplacian matrix corresponding to the to-be-classified document image, and $W$ denotes a weighting parameter.

In S205, the to-be-classified document image is classified based on the associated multimodal feature corresponding to each text box.

In the image classification method according to this embodiment of the present application, a to-be-classified document image is input into a pretrained neural network, and a feature submap of each text box of the to-be-classified document image is obtained by use of the neural network; the feature submap of each text box, a semantic feature corresponding to preobtained text information of each text box and a position feature corresponding to preobtained position information of each text box are input into a pretrained multimodal feature fusion model, and the feature submap of each text box, the semantic feature corresponding to the preobtained text information of each text box and the position feature corresponding to the preobtained position information of each text box are fused, by use of the multimodal feature fusion model, into a multimodal feature corresponding to each text box; and then the to-be-classified document image is classified based on the multimodal feature corresponding to each text box. That is, in the present application, the feature submap of each text box, the semantic feature corresponding to the preobtained text information of each text box and the position feature corresponding to the preobtained position information of each text box are fused into a multimodal feature, and then the to-be-classified document image is classified based on the multimodal feature corresponding to each text box. In an existing image classification method, only an image feature of a document image can be extracted for classification of the document image. This method ignores a semantic feature and a position feature in the document image. As a result, the semantic and position features in the document image cannot be well used. Moreover, complex post-processing is required in the classification method based on a convolutional neural network to improve the classification accuracy. Since the present application uses the technique of fusing the feature submap of each text box, the semantic feature corresponding to the preobtained text information of each text box and the position feature corresponding to the preobtained position information of each text box into a multimodal feature, the problems in a classification method based on a convolutional neural network in the related art are overcome, where the problems includes that the classification method based on a convolutional neural network in the related art can be used to extract only an image feature of a document image to classify the document image, ignores a semantic feature and a position feature in the document image and thus cannot well use the semantic and position feature information in the document image, and requires complex post-processing to improve the classification accuracy. Therefore, the technique according to the present application can well use semantic and position features in a document image and effectively fuse and align image information, semantic information and position information of the document image to achieve the object of improving the classification accuracy of the document image. Moreover, the technique according to the present application can be implemented and popularized easily and thus can be used more widely.

Embodiment three

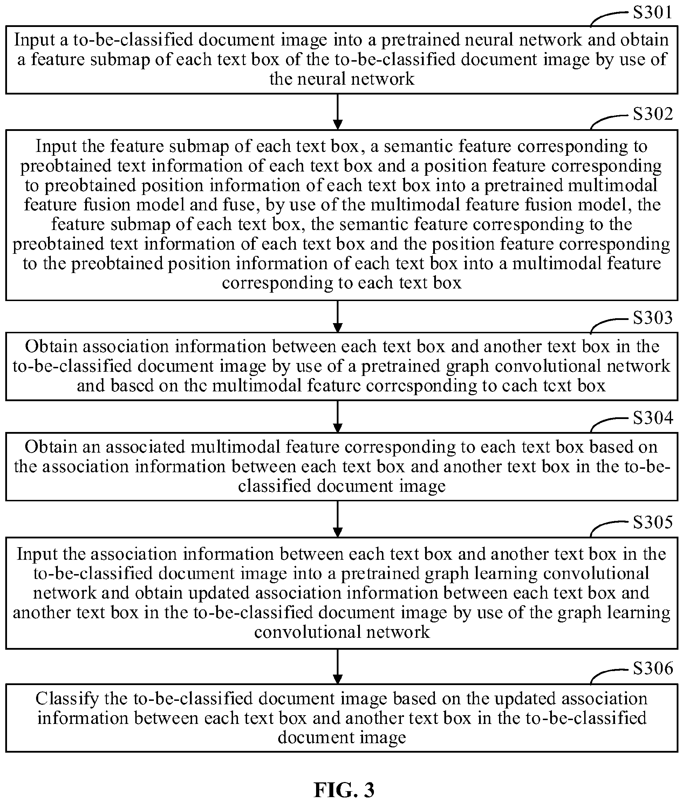

FIG. 3 is a third flowchart of an image classification method according to an embodiment of the present application. This embodiment is optimized and expanded based on the preceding solution and can be combined with each preceding optional implementation. As shown in FIG. 3, the image classification method may include the steps below.

In S301, a to-be-classified document image is input into a pretrained neural network, and a feature submap of each text box of the to-be-classified document image is obtained by use of the neural network.

In S302, the feature submap of each text box, a semantic feature corresponding to preobtained text information of each text box and a position feature corresponding to preobtained position information of each text box are input into a pretrained multimodal feature fusion model, and the feature submap of each text box, the semantic feature corresponding to the preobtained text information of each text box and the position feature corresponding to the preobtained position information of each text box are fused, by use of the multimodal feature fusion model, into a multimodal feature corresponding to each text box.

In S303, association information between each text box and another text box in the to-be-classified document image is obtained by use of a pretrained graph convolutional network and based on the multimodal feature corresponding to each text box.

In S304, an associated multimodal feature corresponding to each text box is obtained based on the association information between each text box and another text box in the to-be-classified document image.

In S305, the association information between each text box and another text box in the to-be-classified document image is input into a pretrained graph learning convolutional network (GLCN), and updated association information between each text box and another text box in the to-be-classified document image is obtained by use of the graph learning convolutional network.

In this step, the electronic device may input the association information between each text box and another text box in the to-be-classified document image into a pretrained graph learning convolutional network and obtain updated association information between each text box and another text box in the to-be-classified document image by use of the graph learning convolutional network. For example, the electronic device may input the association information between each text box and another text box in the to-be-classified document image into a pretrained graph learning convolutional network and obtain updated association information between each text box and another text box in the to-be-classified document image by use of the graph learning convolutional network; and classify the to-be-classified document image based on the updated association information between each text box and another text box in the to-be-classified document image. The feature of each text box is obtained independently. For this reason, to enable transmission and communication between different token-level features, it is feasible to input these features into a GCN model to enable each token-level feature to acquire information related to the each token-level feature. In this process, the structure of the graph convolutional network may be updated by use of the graph learning convolutional network. The network structure of the graph learning convolutional network can be changed dynamically. When the traditional graph convolutional network is used, the graph structure cannot be changed once determined, making it difficult to accurately model for a complex document image. In contrast, the network structure of the graph learning convolution network can be changed dynamically based on the input data.

In S306, the to-be-classified document image is classified based on the updated association information between each text box and another text box in the to-be-classified document image.

In the present application, a multimodal feature is used for the first time in a document image classification task. The use of multimodal information overcomes the disadvantage that unimodal feature information is used in an existing image classification solution, effectively improving the classification accuracy of a document image. Moreover, the use of multimodal information reduces dependence on an image feature so that a more lightweight convolutional neural network can be used to extract an image feature, greatly increasing the speed of the model. It is to be noted that the graph convolutional neural network used in the present application is much effective for unstructured information such as a document image and thus ensures a quite good classification accuracy. With this capability, the pressure of a downstream task is reduced due to the accurate upstream classification of an image. In this manner, a subclass document scenario can be optimized in a more targeted manner, and OCR can be promoted more widely, developed at lower costs and used with a more ensured accuracy. Moreover, the graph convolutional neural network used in the present application is applicable to more scenarios, including finance, education, health care, insurance, office and government affairs, bringing about large-scale traffic and profits.

In the image classification method according to this embodiment of the present application, a to-be-classified document image is input into a pretrained neural network, and a feature submap of each text box of the to-be-classified document image is obtained by use of the neural network; the feature submap of each text box, a semantic feature corresponding to preobtained text information of each text box and a position feature corresponding to preobtained position information of each text box are input into a pretrained multimodal feature fusion model, and the feature submap of each text box, the semantic feature corresponding to the preobtained text information of each text box and the position feature corresponding to the preobtained position information of each text box are fused, by use of the multimodal feature fusion model, into a multimodal feature corresponding to each text box; and then the to-be-classified document image is classified based on the multimodal feature corresponding to each text box. That is, in the present application, the feature submap of each text box, the semantic feature corresponding to the preobtained text information of each text box and the position feature corresponding to the preobtained position information of each text box are fused into a multimodal feature, and then the to-be-classified document image is classified based on the multimodal feature corresponding to each text box. In an existing image classification method, only an image feature of a document image can be extracted for classification of the document image. This method ignores a semantic feature and a position feature in the document image. As a result, the semantic and position features in the document image cannot be well used. Moreover, complex post-processing is required in the classification method based on a convolutional neural network to improve the classification accuracy. Since the present application uses the technique of fusing the feature submap of each text box, the semantic feature corresponding to the preobtained text information of each text box and the position feature corresponding to the preobtained position information of each text box into a multimodal feature, the problems in a classification method based on a convolutional neural network in the related art are overcome, where the problems includes that the classification method based on a convolutional neural network in the related art can be used to extract only an image feature of a document image to classify the document image, ignores a semantic feature and a position feature in the document image and thus cannot well use the semantic and position feature information in the document image, and requires complex post-processing to improve the classification accuracy. Therefore, the technique according to the present application can well use semantic and position features in a document image and effectively fuse and align image information, semantic information and position information of the document image to achieve the object of improving the classification accuracy of the document image. Moreover, the technique according to the present application can be implemented and popularized easily and thus can be used more widely.

Embodiment four

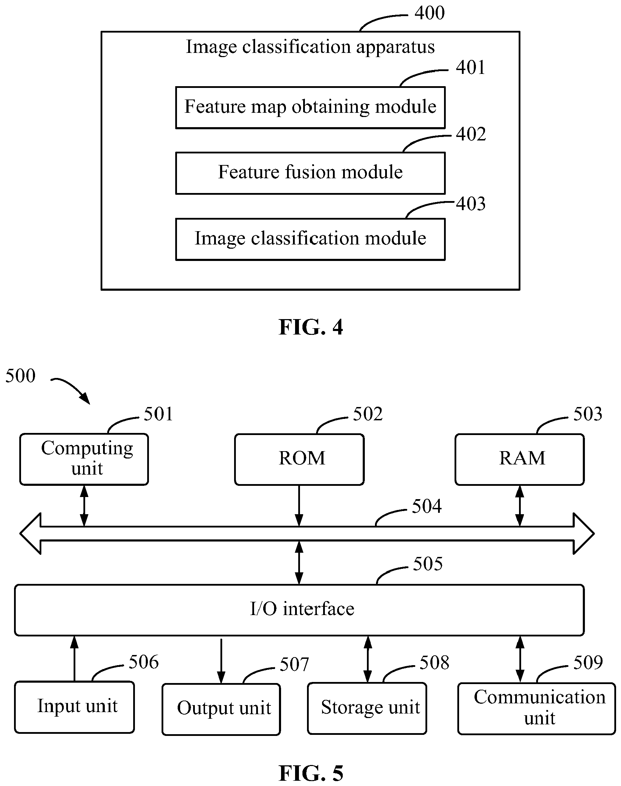

FIG. 4 is a diagram illustrating the structure of an image classification apparatus according to an embodiment of the present application. As shown in FIG. 4, the apparatus 400 includes a feature map obtaining module 401, a feature fusion module 402 and an image classification module 403.

The feature map obtaining module 401 is configured to input a to-be-classified document image into a pretrained neural network and obtain a feature submap of each text box of the to-be-classified document image by use of the neural network.

The feature fusion module 402 is configured to input the feature submap of each text box and a semantic feature corresponding to preobtained text information of each text box and a position feature corresponding to preobtained position information of each text box into a pretrained multimodal feature fusion model and fuse, by use of the multimodal feature fusion model, the feature submap of each text box, the semantic feature corresponding to the preobtained text information of each text box and the position feature corresponding to the preobtained position information of each text box into a multimodal feature corresponding to each text box.

The image classification module 403 is configured to classify the to-be-classified document image based on the multimodal feature corresponding to each text box.

Further, the image classification module 403 is configured to pool the multimodal feature corresponding to each text box to obtain a multimodal feature corresponding to the to-be-classified document image; and classify the to-be-classified document image based on the multimodal feature corresponding to the to-be-classified document image.

Further, the image classification module 403 is further configured to obtain association information between each text box and another text box in the to-be-classified document image by use of a pretrained graph convolutional network and based on the multimodal feature corresponding to each text box; and obtain an associated multimodal feature corresponding to each text box based on the association information between each text box and another text box in the to-be-classified document image and classify the to-be-classified document image based on the associated multimodal feature corresponding to each text box.

Further, the image classification module 403 is configured to pool the multimodal feature corresponding to each text box to obtain a token-level feature corresponding to each text box; and input the token-level feature corresponding to each text box into the pretrained graph convolutional network and obtain the association information between each text box and another text box in the to-be-classified document image by use of the graph convolutional network.

Further, the image classification module 403 is further configured to input the association information between each text box and another text box in the to-be-classified document image into a pretrained graph learning convolutional network and obtain updated association information between each text box and another text box in the to-be-classified document image by use of the graph learning convolutional network; and classify the to-be-classified document image based on the updated association information between each text box and another text box in the to-be-classified document image.

Further, the multimodal feature fusion model includes six layers. Each layer includes two sublayers: a first sublayer and a second sublayer. The first sublayer is a multihead self-attention layer. The second sublayer is a fully connected feedforward network. The dimension of an output vector of the first sublayer and the dimension of an output vector of the second sublayer are each 512.

The image classification apparatus can perform the method according to any embodiment of the present application and has function modules and beneficial effects corresponding to the performed method. For technical details not described in detail in this embodiment, see the image classification method according to any embodiment of the present application.

Embodiment five

According to an embodiment of the present disclosure, the present disclosure further provides an electronic device, a readable storage medium and a computer program product.

FIG. 5 is a block diagram of an electronic device 500 for implementing an image defect detection method according to an embodiment of the present disclosure. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 5, the device 500 includes a computing unit 501. The computing unit 501 can perform various appropriate actions and processing according to a computer program stored in a read-only memory (ROM) 502 or a computer program loaded into a random-access memory (RAM) 503 from a storage unit 508. The RAM 503 can also store various programs and data required for operations of the device 500. The calculation unit 501, the ROM 502 and the RAM 503 are connected to each other by a bus 504. An input/output (I/O) interface 505 is also connected to the bus 504.

Multiple components in the device 500 are connected to the I/O interface 505. The multiple components include an input unit 506 such as a keyboard or a mouse; an output unit 507 such as a display or a speaker; a storage unit 508 such as a magnetic disk or an optical disk; and a communication unit 509 such as a network card, a modem or a wireless communication transceiver. The communication unit 509 allows the device 500 to exchange information/data with other devices over a computer network such as the Internet and/or over various telecommunication networks.

The computing unit 501 may be a general-purpose and/or special-purpose processing component having processing and computing capabilities. Examples of the computing unit 501 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 501 performs various preceding methods and processing, for example, the image classification method. For example, in some embodiments, the image classification method may be implemented as a computer software program tangibly contained in a machine-readable medium, for example, the storage unit 508. In some embodiments, part or all of computer programs can be loaded and/or installed on the device 500 via the ROM 502 and/or the communication unit 509. When the computer program is loaded into the RAM 503 and executed by the computing unit 501, one or more steps of the preceding image classification method can be performed. Alternatively, in other embodiments, the computing unit 501 may be configured to perform the image classification method in any other appropriate manner (for example, by use of firmware).

The preceding various embodiments of systems and techniques may be implemented in digital electronic circuitry, integrated circuitry, a field-programmable gate array (FPGA), an application-specific integrated circuit (ASIC), an application-specific standard product (ASSP), a system on a chip (SoC), a complex programmable logic device (CPLD), computer hardware, firmware, software and/or any combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

Program codes for implementation of the method of the present disclosure may be written in any combination of one or more programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that contains or stores a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any appropriate combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network

(LAN), a wide area network (WAN), a blockchain network and the Internet.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present disclosure are within the scope of the present disclosure.

**Claims**

1. An image classification method, comprising:

   inputting (S101, S201, S301) a to-be-classified document image into a pretrained neural network and obtaining a feature submap of each text box of the to-be-classified document image by use of the neural network;
   inputting (S102, S202, S302) the feature submap of the each text box, a semantic feature corresponding to preobtained text information of the each text box and a position feature corresponding to preobtained position information of the each text box into a pretrained multimodal feature fusion model and fusing, by use of the multimodal feature fusion model, the feature submap of the each text box, the semantic feature corresponding to the preobtained text information of the each text box and the position feature corresponding to the preobtained position information of the each text box into a multimodal feature corresponding to the each text box; and

classifying (S103) the to-be-classified document image based on the multimodal feature corresponding to the each text box.

2. The method of claim 1, wherein classifying (S103) the to-be-classified document image based on the multimodal feature corresponding to the each text box comprises:

pooling the multimodal feature corresponding to the each text box to obtain a multimodal feature corresponding to the to-be-classified document image; and
classifying the to-be-classified document image based on the multimodal feature corresponding to the to-be-classified document image.

3. The method of claim 1, after fusing, by use of the multimodal feature fusion model, the feature submap of the each text box, the semantic feature corresponding to the preobtained text information of the each text box and the position feature corresponding to the preobtained position information of the each text box into the multimodal feature corresponding to the each text box, the method further comprising:

obtaining (S203, S303) association information between the each text box and another text box in the to-be-classified document image by use of a pretrained graph convolutional network and based on the multimodal feature corresponding to the each text box; and
obtaining (S204, S304) an associated multimodal feature corresponding to the each text box based on the association information between the each text box and the another text box in the to-be-classified document image; and
classifying (S205) the to-be-classified document image based on the associated multimodal feature corresponding to the each text box.

4. The method of claim 3, wherein obtaining (S203) the association information between the each text box and the another text box in the to-be-classified document image by use of the pretrained graph convolutional network and based on the multimodal feature corresponding to the each text box comprises:

pooling the multimodal feature corresponding to the each text box to obtain a token-level feature corresponding to the each text box; and
inputting the token-level feature corresponding to the each text box into the pretrained graph convolutional network and obtaining the association information between the each text box and the another text box in the to-be-classified document image by use of the graph convolutional network.

5. The method of claim 4, after obtaining the association information between the each text box and the another text box in the to-be-classified document image by use of the graph convolutional network, the method further comprising:

inputting (S305) the association information between the each text box and the another text box in the to-be-classified document image into a pretrained graph learning convolutional network and obtaining updated association information between the each text box and the another text box in the to-be-classified document image by use of the graph learning convolutional network; and
classifying (S306) the to-be-classified document image based on the updated association information between the each text box and the another text box in the to-be-classified document image.

6. The method of claim 1, wherein the multimodal feature fusion model comprises six layers, and each layer comprises two sublayers: a first sublayer and a second sublayer, wherein the first sublayer is a multihead self-attention layer, the second sublayer is a fully connected feedforward network, and a dimension of an output vector of the first sublayer and a dimension of an output vector of the second sublayer are each 512.

7. An image classification apparatus (400), comprising a feature map obtaining module (401), a feature fusion module (402) and an image classification module (403), wherein

the feature map obtaining module (401) is configured to input a to-be-classified document image into a pretrained neural network and obtain a feature submap of each text box of the to-be-classified document image by use of the neural network;
the feature fusion module (402) is configured to input the feature submap of the each text box and a semantic feature corresponding to preobtained text information of the each text box and a position feature corresponding to preobtained position information of the each text box into a pretrained multimodal feature fusion model and fuse, by use of the multimodal feature fusion model, the feature submap of the each text box, the semantic feature corresponding to the preobtained text information of the each text box and the position feature corresponding to the preobtained position information of the each text box into a multimodal feature corresponding to the each text box; and
the image classification module (403) is configured to classify the to-be-classified document image based on the multimodal feature corresponding to the each text box.

8. The apparatus of claim 7, wherein the image classification module (403) is configured to pool the multimodal feature corresponding to the each text box to obtain a multimodal feature corresponding to the to-be-classified document image; and classify the to-be-classified document image based on the multimodal feature corresponding to the to-be-classified document image.

9. The apparatus of claim 7, wherein the image classification module (403) is further configured to obtain association information between the each text box and another text box in the to-be-classified document image by use of a pretrained graph convolutional network and based on the multimodal feature corresponding to the each text box; and obtain an associated multimodal feature corresponding to the each text box based on the association information between the each text box and the another text box in the to-be-classified document image and classify the to-be-classified document image based on the associated multimodal feature corresponding to the each text box.

10. The apparatus of claim 9, wherein the image classification module (403) is configured to pool the multimodal feature corresponding to the each text box to obtain a token-level feature corresponding to the each text box; and input the token-level feature corresponding to the each text box into the pretrained graph convolutional network and obtain the association information between the each text box and the another text box in the to-be-classified document image by use of the graph convolutional network.

11. The apparatus of claim 10, wherein the image classification module (403) is further configured to input the association information between the each text box and the another text box in the to-be-classified document image into a pretrained graph learning convolutional network and obtain updated association information between the each text box and the another text box in the to-be-classified document image by use of the graph learning convolutional network; and classify the to-be-classified document image based on the updated association information between the each text box and the another text box in the to-be-classified document image.

12. The apparatus of claim 7, wherein the multimodal feature fusion model (402) comprises six layers, and each layer comprises two sublayers: a first sublayer and a second sublayer, wherein the first sublayer is a multihead self-attention layer, the second sublayer is a fully connected feedforward network, and a dimension of an output vector of the first sublayer and a dimension of an output vector of the second sublayer are each 512.

13. An electronic device, comprising:

at least one processor; and
a memory communicatively connected to the at least one processor, wherein
the memory stores instructions executable by the at least one processor, and the instructions are configured to, when executed by the at least one processor, cause the at least one processor to perform the method of any one of claims 1 to 6.

14. A non-transitory computer-readable storage medium storing computer instructions for causing a computer to perform the method of any one of claims 1 to 6.

15. A computer program product, comprising a computer program which, when executed by a processor, causes the processor to perform the method of any one of claims 1 to 6.

```
                                                                              ┌─S101
┌────────────────────────────────────────────────────────────────────────────┐
│ Input a to-be-classified document image into a pretrained neural network and │
│ obtain a feature submap of each text box of the to-be-classified document    │
│ image by use of the neural network                                           │
└────────────────────────────────────────────────────────────────────────────┘
                                       │
                                       ▼                                ┌─S102
┌────────────────────────────────────────────────────────────────────────────┐
│ Input the feature submap of each text box, a semantic feature corresponding  │
│ to preobtained text information of each text box and a position feature      │
│ corresponding to preobtained position information of each text box into a     │
│ pretrained multimodal feature fusion model and fuse, by use of the multimodal │
│ feature fusion model, the feature submap of each text box, the semantic      │
│ feature corresponding to the preobtained text information of each text box    │
│ and the position feature corresponding to the preobtained position           │
│ information of each text box into a multimodal feature corresponding to each  │
│ text box                                                                     │
└────────────────────────────────────────────────────────────────────────────┘
                                       │
                                       ▼                                ┌─S103
┌────────────────────────────────────────────────────────────────────────────┐
│ Classify the to-be-classified document image based on the multimodal feature │
│ corresponding to each text box                                               │
└────────────────────────────────────────────────────────────────────────────┘
```

**FIG. 1**

S201

Input a to-be-classified document image into a pretrained neural network and obtain a feature submap of each text box of the to-be-classified document image by use of the neural network

S202

Input the feature submap of each text box, a semantic feature corresponding to preobtained text information of each text box and a position feature corresponding to preobtained position information of each text box into a pretrained multimodal feature fusion model and fuse, by use of the multimodal feature fusion model, the feature submap of each text box, the semantic feature corresponding to the preobtained text information of each text box and the position feature corresponding to the preobtained position information of each text box into a multimodal feature corresponding to each text box

S203

Obtain association information between each text box and another text box in the to-be-classified document image by use of a pretrained graph convolutional network and based on the multimodal feature corresponding to each text box

S204

Obtain an associated multimodal feature corresponding to each text box based on the association information between each text box and another text box in the to-be-classified document image

S205

Classify the to-be-classified document image based on the associated multimodal feature corresponding to each text box

**FIG. 2**

S301

Input a to-be-classified document image into a pretrained neural network and obtain a feature submap of each text box of the to-be-classified document image by use of the neural network

S302

Input the feature submap of each text box, a semantic feature corresponding to preobtained text information of each text box and a position feature corresponding to preobtained position information of each text box into a pretrained multimodal feature fusion model and fuse, by use of the multimodal feature fusion model, the feature submap of each text box, the semantic feature corresponding to the preobtained text information of each text box and the position feature corresponding to the preobtained position information of each text box into a multimodal feature corresponding to each text box

S303

Obtain association information between each text box and another text box in the to-be-classified document image by use of a pretrained graph convolutional network and based on the multimodal feature corresponding to each text box

S304

Obtain an associated multimodal feature corresponding to each text box based on the association information between each text box and another text box in the to-be-classified document image

S305

Input the association information between each text box and another text box in the to-be-classified document image into a pretrained graph learning convolutional network and obtain updated association information between each text box and another text box in the to-be-classified document image by use of the graph learning convolutional network

S306

Classify the to-be-classified document image based on the updated association information between each text box and another text box in the to-be-classified document image

**FIG. 3**

400

Image classification apparatus

401

Feature map obtaining module

402

Feature fusion module

403

Image classification module

**FIG. 4**

500

501
Computing unit

502
ROM

503
RAM

504

505
I/O interface

506
Input unit

507
Output unit

508
Storage unit

509
Communication unit

**FIG. 5**